# EUROPÄISCHE PATENTANMELDUNG

(11) **EP 3 974 350 A1**
(43) Veröffentlichungstag der Anmeldung: **30.03.2022**
(21) Anmeldenummer: 21196259.2
(22) Anmeldetag: 13.09.2021
(51) Int. Cl.: B65G 1/04

(54) **VERFAHREN ZUM BETREIBEN EINES REGALLAGERSYSTEMS UND REGALLAGERSYSTEM**

(30) Priorität: 23.09.2020 DE 102020124809
(71) Anmelder: STILL GmbH, 22113 Hamburg (DE)
(72) Erfinder: van Bergen, Noe, 2018 Antwerpen (BE)
(74) Vertreter: Patentship Patentanwaltgesellschaft

(57) **Zusammenfassung**

Die Erfindung betrifft ein Verfahren zum Betreiben eines Regallagersystems, insbesondere Hochregallagersystems, mit Regalreihen (2, 3), die mehrere, übereinander angeordnete, Regalebenen mit Lagerstellen (4, 9) für, insbesondere auf Paletten angeordnete, Waren (5) aufweisen, sowie zwischen den Regalreihen (2, 3) befindlichen Regalgassen (1), wobei mittels mindestens eines, in Längsrichtung der Regalgassen (1) bewegbaren, Hochhub-Flurförderzeug (6), insbesondere Schmalgangstapler, mit einer höhenbeweglichen, alle Regalebenen erreichbaren, Lastaufnahmeeinrichtung (11) zumindest die oberhalb der untersten Regalebene liegenden Regalebenen bedient werden, um Waren (5) an den Lagerstellen dieser Regalebenen ein- und auszulagern. Es wird vorgeschlagen, dass mittels mindestens eines zusätzlich zum Hochhub-Flurförderzeug (6) vorgesehenen, in den Regalgassen (1) bewegbaren, niedrighubigen oder hublosen Flurförderzeugs (8) mit einer, nur die unterste Regalebene erreichbaren, Lastaufnahmeeinrichtung (10) die unterste Regalebene bedient wird, um Waren an den Lagerstellen (4, 9) der untersten Regalebene ein- und auszulagern. Ferner betrifft die Erfindung ein Regallagersystem zur Durchführung des Verfahrens.

## Beschreibung

Die Erfindung betrifft ein Verfahren zum Betreiben eines Regallagersystems, insbesondere Hochregallagersystems, mit Regalreihen, die mehrere, übereinander angeordnete, Regalebenen mit Lagerstellen für, insbesondere auf Paletten angeordnete, Waren aufweisen, sowie zwischen den Regalreihen befindlichen Regalgassen, wobei mittels mindestens eines, in Längsrichtung der Regalgassen bewegbaren, Hochhub-Flurförderzeugs, insbesondere eines Schmalgangstaplers, mit einer höhenbeweglichen, alle Regalebenen erreichbaren, Lastaufnahmeeinrichtung zumindest die oberhalb der untersten Regalebene liegenden Regalebenen bedient werden, um Waren an den Lagerstellen dieser Regalebenen ein- und auszulagern.

Ferner betrifft die Erfindung ein Hochregallagersystem zur Durchführung des Verfahrens.

Dabei bezieht sich die Erfindung insbesondere auf automatisierte Schmalgang-Regallagersysteme mit sehr schmalen Regalgassen. Diese Regallagersysteme bestehen aus einzelnen Regalreihen für Paletten und automatisierten Schmalgang-Hochhub-Flurförderzeugen, insbesondere Schmalgangstaplern, die durch die Regalgassen fahren. Die Regalgassen haben normalerweise eine Breite von 1,7 bis 2,0 m, was für herkömmliche Gabelstapler zu schmal ist.

Die Hochhub-Flurförderzeuge weisen üblicherweise eine vollautomatische Fahrzeugsteuerung auf und kommen ohne eine Bedienperson aus. Die Hochhub-Flurförderzeuge lagern Paletten in den Lagerstellen des Regalsystems ein und aus und kombinieren den horizontalen Transport und den vertikalen Transport der Waren in dem Regallagersystem. Die Hochhub-Flurförderzeuge können auch zwischen den Regalgassen des Lagersystems wechseln.

Ein solches Regallagersystem, das mit automatisierten Hochhub-Flurförderzeugen betrieben wird, kann als geschlossenes System angesehen werden. Alle Paletten, die in das Regallagersystem gelangen oder aus dem Regallagersystem kommen, werden an Übergabeplätzen, die in der Regel an einem oder beiden Enden einer Regalreihe angeordnet sind, an andere Flurförderzeugen, die sich außerhalb der Regalgassen bewegen, übergeben beziehungsweise von diesen sich außerhalb der Regalgassen bewegen Flurförderzeuge übernommen. Solche Übergabeplätze können Bodenpositionen außerhalb der Regalreihe, Auslegerpositionen - sogenannte Cantilever-Konfiguration - am Ende der Regalreihe oder Positionen innerhalb der ersten Regallagerstellen sein. An diese Übergabeplätze übergeben und von diesen Übergabeplätzen aus übernehmen normalerweise manuelle oder automatisierte Flurförderzeuge, beispielsweise Gabelstapler, die Paletten und bewegen die Paletten von und zu anderen Schnittstellenbereichen. Oft arbeiten diese Lagersysteme in mehreren Schichten, zum Beispiel 18 Stunden am Tag, aber selten rund um die Uhr.

Die Regalgassen derartiger Regallagersysteme sind meist sehr lang, z.B. 100 Meter lang. Um eine Palette einzulagern, muss das Hochhub-Flurförderzeug bis an das Ende der Regalgasse zu einem Übergabeplatz bewegt werden, um eine Palette an dem Übergabeplatz aufzunehmen und die Palette zu ihrer Lagerstelle in der Regalreihe zu fahren und dort einzulagern. Um eine Palette auszulagern, muss das Hochhub-Flurförderzeug nach der Entnahme der Palette aus ihrer Lagerstelle in der Regalreihe bis an das Ende der Regalgasse zu einem Übergabeplatz fahren, um die Palette dort abzustellen. Außerdem sind Regallager häufig relativ hoch, wobei die Lagerstellen der höchsten Regalebene typischerweise zwischen 10 und 15 m liegen. Damit das Hochhub-Flurförderzeug so hoch heben kann, ist das Flurförderzeug groß und relativ teuer im Vergleich zu Flurförderzeugen, die ausschließlich horizontale Transporte durchführen. Automatisierte Hochhub-Flurförderzeuge kosten typischerweise zwischen 150.000 und 200.000 Euro. Der Nachteil eines automatisierten Regalsystems des Standes der Technik besteht darin, dass diese komplexen und teuren Hochhub-Flurförderzeugs in dem Regallagersystem hauptsächlich für den horizontalen Transport der Waren zwischen den Übergabeplätzen am Ende der Regalreihen und den Lagerstellen in den Regalreihen verwendet wird, was zu viel geringeren Kosten möglich wäre.

Darüber hinaus ist die zulässige Fahrgeschwindigkeit in nicht geschlossenen, automatisierten Regallagersystemen aufgrund von vorgeschriebenen Normen auf 1,2 m/s begrenzt, während die Hochhub-Flurförderzeuge typischerweise 2 - 2,5 m/s leisten können.

Die Anzahl der Übergabeplätze ist in bekannten Regallagersystemen immer begrenzt, normalerweise auf 2 bis 4 eingehende Übergabeplätze und weitere 2 bis 3 ausgehende Übergabeplätze pro Regalgasse. Da die Übergabeplätze als Puffer dienen, hat eine relativ geringe Anzahl von Übergabeplätzen und damit Pufferpositionen zwei Nachteile:
a) Sobald die Puffer gefüllt oder geleert sind, kann das Hochhub-Flurförderzeug keine Arbeit mehr in der Regalgasse ausführen. Der Wechsel in eine andere Regalgasse des Regalsystems ist ein relativ zeitaufwändiger Vorgang, bei dem das teure Hochhub-Flurförderzeug nicht produktiv ist.
b) Je größer die Puffer sind, d.h. je mehr Übergabeplätze vorhanden sind, desto mehr kann das automatisierte Regallagersystem seine Arbeitslast über einen Zeitraum von 24 Stunden verteilen, selbst wenn beispielsweise Schnittstellenoperationen, beispielsweise der Transport der Waren zwischen den Übergabeplätzen und Schnittstellenbereichen, nur während 16 Stunden aktiv sind. Kleine Puffer, d.h. wenige Übergabeplätze, bedeuten, dass die teuren Hochhub-Flurförderzeug nicht produktiv werden, sobald die Schnittstellenoperationen aufhören und die Puffer leer oder voll sind.

Oft muss ein Teil der Waren nur für kurze Zeiträume gelagert werden, z.B. im Falle von schneller Umschlagsware oder so genannter Cross-Docking-Ware. Der Aufwand für ein teures Hochhub-Flurförderzeug, eine Last eine Stunde lang einzulagern, ist jedoch genau so hoch, wie eine Last für z.B. 1 Jahr einzulagern.

In der so genannten Cantilever-Konfiguration müssen die Flurförderzeuge, die die Schnittstellenoperationen durchführen, beispielsweise Waren zwischen den Übergabeplätzen und Schnittstellenbereichen transportieren, umso höher heben können, je mehr Übergabeplätze gewünscht werden. Höheres Heben bedeutet teurere (manuelle oder automatisierte) Flurförderzeuge zum Bewegen von Lasten von und zu den Schnittstellenbereichen.

Je nach Auslegung des Regallagersystems müssen die Flurförderzeuge, die die Schnittstellenoperationen durchführen, beispielsweise Waren zwischen den Übergabeplätzen und Schnittstellenbereichen transportieren, auch Umwege fahren, um zu den Übergabeplätzen des Regallagers an den Endbereichen der Regalgassen zu gelangen.

Der vorliegenden Erfindung liegt die Aufgabe zugrunde, ein Verfahren der eingangs genannten Art sowie ein Regallagersystem zur Durchführung des Verfahrens so auszugestalten, dass ein effizienter Betrieb des Regallagersystems ermöglicht wird.

Diese Aufgabe wird verfahrensseitig erfindungsgemäß dadurch gelöst, dass mittels mindestens eines zusätzlich zum Hochhub-Flurförderzeug vorgesehenen, in den Regalgassen bewegbaren, niedrighubigen oder hublosen Flurförderzeugs mit einer, nur die unterste Regalebene erreichbaren, Lastaufnahmeeinrichtung die unterste Regalebene bedient wird, um Waren an den Lagerstellen der untersten Regalebene ein- und auszulagern.

Dabei wird vorzugsweise als niedrighubiges oder hubloses Flurförderzeug ein flaches Unterfahr-Flurförderzeug mit einer als, auf dem Unterfahr-Flurförderzeug angeordneten, Lastplattform ausgebildeten Lastaufnahmeeinrichtung verwendet. Solche flachen Unterfahr-Flurförderzeuge werden auch mit dem englischen Begriff "Turtle" bezeichnet.

Besonders bevorzugt wird dabei ein Unterfahr-Flurförderzeug verwendet, das eine Grundfläche aufweist, die der Grundfläche einer Palette entspricht, so dass das Unterfahr-Flurförderzeug vollständig unter die Palette passt.

Die Erfindung führt somit niedrighubige oder hublose Flurförderzeuge, insbesondere flache Unterfahr-Flurförderzeuge, sogenannte Turtles, als integralen Bestandteil eines automatisierten Regallagersystems ein und schafft eine Reihe von Vorteilen, die die Effizienz der teuren Hochhub-Flurförderzeuge optimieren. Die niedrighubigen oder hublosen Flurförderzeuge stellen nicht nur den Transport von und zu den Schnittstellenbereichen bereit, sondern sind Teil des Regalsystems selbst. Anstatt die niedrighubigen oder hublosen Flurförderzeuge nur außerhalb der Regalgassen zwischen den Übergabeplätzen am Ende des Regalgangs und den Schnittstellenbereichen fahren zu lassen und Lasten an den Übergabeplätzen am Ende des Regalgangs übergeben zu lassen, fahren die niedrighubigen oder hublosen Flurförderzeuge bei der Erfindung in die Regalgassen hinein und setzen Waren in den Lagerstellen der untersten Regalebene ab bzw. nehmen Waren von den Lagerstellen der untersten Regalebene auf.

Da insbesondere flache Unterfahr-Flurförderzeuge, sogenannte Turtles, nur eine minimale Grundfläche haben, z.B. 1.150 mm x 540 mm x 220 mm (Länge x Breite x Höhe), passen sie in die schmalen Regalgassen eines Schmalgang-Regalsystems und können sich sogar innerhalb der Regalgassen drehen.

Dabei können die niedrighubigen oder hublosen Flurförderzeuge dazu verwendet werden, Waren an den Lagerstellen in der untersten Regalebene ein- und auszulagern, während die Hochhub-Flurförderzeuge dazu eingesetzt werden, die darüber liegenden Lagerstellen höherer Regalebenen zu bedienen. Dabei werden vorteilhafterweise Waren mit einer kurzen Einlagerungsdauer in der untersten Regalebene eingelagert. Allein schon durch diese Arbeitsteilung kann die Effizienz des Regallagersystems deutlich erhöht werden.

Eine noch stärkere Effizienzsteigerung lässt sich dadurch erreichen, dass sich die teuren Hochhub-Flurförderzeuge im Wesentlichen auf die Hebefunktion und somit den vertikalen Transport der Waren in den Regalgassen konzentrieren und die niedrighubigen oder hublosen Flurförderzeuge den größten Teil des horizontalen Transports der Waren innerhalb der Regalgassen übernehmen.

Dabei wird das Hochhub-Flurförderzeug bevorzugt nur innerhalb der Regalgassen bewegt.

Das niedrighubige oder hublose Flurförderzeug wird dagegen vorzugsweise zur Warenaufnahme und Warenabgabe zu mindestens einem Warenaufnahme- und Warenabgabe-Bereich, insbesondere an mindestens einem Ende der Regalgassen, bewegt.

Eine besonders bevorzugte Ausgestaltung der Erfindung sieht vor, dass die auszulagernden Waren mittels des Hochhub-Flurförderzeugs von Lagerstellen in Regalebenen oberhalb der untersten Regalebene entnommen und an freien, als Übergabestellen dienenden, Lagerstellen der untersten Regalebene abgelegt werden, wo die Waren mittels des niedrighubigen oder hublosen Flurförderzeugs aufgenommen und aus der Regalgasse zum Warenaufnahme- und Warenabgabe-Bereich transportiert werden.

Andererseits werden die einzulagernde Waren bevorzugt mittels des niedrighubigen oder hublosen Flurförderzeugs am Warenaufnahme- und Warenabgabe-Bereich aufgenommen und in die Regalgassen transportiert und an freien, als Übergabestellen dienenden, Lagerstellen der untersten Regalebene abgelegt, wo die Waren mittels des Hochhub-Flurförderzeugs aufgenommen und an Lagerstellen in Regalebenen oberhalb der untersten Regalebene abgelegt werden.

Dabei werden als Übergabestellen zweckmäßigerweise freie Lagerstellen der untersten Regalebene verwendet, die sich in Nähe der Lagerstellen der oberen Regalebenen befinden, von denen die auszulagernden Waren mittels des Hochhub-Flurförderzeugs entnommen oder an denen die einzulagernden Waren mittels des Hochhub- Flurförderzeugs abgelegt werden. Dadurch wird der horizontale Transport der Waren innerhalb der Regalgasse mit dem Hochhub-Flurförderzeug in effektiver Weise minimiert.

Die unteren Übergabestellen können hierzu jeweils mit einem mechanischen Ständer ausgestattet werden, der mit den niedrighubigen oder hublosen Flurförderzeugen kompatibel ist. Infolgedessen können alle Lagerstellen der untersten Regalebene zu Übergabestellen umfunktioniert werden, an denen mit den niedrighubigen oder hublosen Flurförderzeugen Waren abgestellt oder aufgenommen werden.

Vorteilhafterweise werden als Hochhub-Flurförderzeug und als niedrighubiges oder hubloses Flurförderzeug autonome oder automatisierte Flurförderzeuge verwendet.

Besonders bevorzugt werden das Hochhub-Flurförderzeug und das niedrighubige oder hublose Flurförderzeug von einem zentralen Lagerverwaltungssystem, insbesondere mit einer elektronischen Steuerungseinheit, gesteuert. Sowohl das Hochhub-Flurförderzeug als auch das niedrighubige oder hublose Flurförderzeug arbeiten also im selben Steuerungs-System und auf derselben Oberfläche. Die Fahrzeuge gehorchen beispielsweise einem Fahrzeug-Management- und Verkehrskontrollsystem, um sicherzustellen, dass sie nicht kollidieren und optimal zusammenarbeiten. Gemäß einer bevorzugten Weiterbildung der Erfindung werden zum Wechseln von Regalgassen Tunnel zwischen benachbarten Regalgassen verwendet, durch die das niedrighubige oder hublose Flurförderzeug bewegt wird. Insbesondere die flachen Unterfahr-Flurförderzeuge, sogenannte Turtles, können die Regalgassen wechseln, indem sie im leeren Zustand unter den Lagerstellen der untersten Regalebene hindurchfahren oder im beladenen Zustand durch bestimmte Tunnel senkrecht zu den Regalgassen fahren. Dies bedeutet, dass der Weg zu den Schnittstellenoperationen optimiert werden kann.

Die Erfindung betrifft ferner ein Regallagersystem, insbesondere Hochregallagersystem, zur Durchführung des Verfahrens mit Regalreihen, die mehrere, übereinander angeordnete, Regalebenen mit Lagerstellen für, insbesondere auf Paletten angeordnete, Waren aufweisen, sowie zwischen den Regalreihen befindlichen Regalgassen, wobei das Regallagersystem mindestens ein, in Längsrichtung der Regalgassen bewegbares, Hochhub- Flurförderzeug, insbesondere Schmalgangstapler, mit einer höhenbeweglichen, alle Regalebenen erreichbaren, Lastaufnahmeeinrichtung umfasst.

Beim Regallagersystem wird die gestellte Aufgabe dadurch gelöst, dass das Regallagersystem zusätzlich zum Hochhub-Flurförderzeug mindestens ein, in den Regalgassen bewegbares, niedrighubiges oder hubloses Flurförderzeug mit einer, nur die unterste Regalebene erreichbaren, Lastaufnahmeeinrichtung umfasst sowie ein, mit dem Hochhub-Flurförderzeug und dem niedrighubigen oder hublosen Flurförderzeug in Wirkverbindung stehendes, zentrales Lagerverwaltungssystem umfasst, das dazu eingerichtet ist, das Hochhub-Flurförderzeug so zu steuern, dass zumindest die oberhalb der untersten Regalebene angeordneten Regalebenen bedient werden, und das niedrighubige oder hublose Flurförderzeug so zu steuern, dass die unterste Regalebene bedient wird.

Die Erfindung bietet eine ganze Reihe von Vorteilen:
1. Die niedrighubigen oder hublosen Flurförderzeuge übernehmen den größten Teil des horizontalen Transports der Waren innerhalb der Regalgasse, was zu geringeren Kosten als beim horizontalen Transport der Waren innerhalb der Regalgasse mit einem Hochhub-Flurförderzeug erfolgt. Das teure Hochhub-Flurförderzeug muss nicht mehr für jeden einzelnen Einlagervorgang und Auslagervorgang einer Ware durch die Regalgasse fahren und einen Übergabeplatz am Ende der Regalgasse anfahren, sondern übernimmt nur noch über eine bestimmte Hebefunktion den vertikalen Transport der Waren in der Regalgasse. Es müssen mit dem Hochhub-Flurförderzeug nur die oberen Paletten nach unten und umgekehrt bewegt werden. Dies führt zu deutlich verbesserten Zykluszeiten.
2. Die niedrighubigen oder hublosen Flurförderzeuge können so schnell fahren wie die Hochhub-Flurförderzeuge, wenn die Geschwindigkeit auf 1,2 m/s beschränkt ist.
3. Das niedrighubige oder hublose Flurförderzeug kann die gesamte unterste Regalebene bedienen, wodurch sich die Anzahl der Übergabeplätze signifikant erhöht. Dieser Sachverhalt wird durch folgendes Beispiel verdeutlicht:
   Bei einer herkömmlichen Regalgasse mit zwei Regalreihen mit einer Länge, die der Länge von 100 Paletten entspricht, und einer Höhe von 5 Ebenen sowie 3 eingehenden und 3 ausgehenden Übergabeplätzen können (3 x 2) / (100 x 5 x 2) = 0,6 % der Lagerstellen als Übergabeplätze und Übergabepuffer verwendet werden.
   Bei einer Regalgasse mit zwei Regalreihen in erfindungsgemäßer Konfiguration können (100 x 2) / (100 x 5 x 2) = 20 % der Lagerstellen als Übergabeplätze und Übergabepuffer verwendet werden. Wenn man viel mehr Puffer hat (in diesem Beispiel um den Faktor 33), ergeben sich zwei Vorteile:
      a) Das Hochhub-Flurförderzeug kann viel länger in derselben Regalgasse bleiben, wodurch zeitaufwändige Regalgassenwechsel vermieden werden.
      b) Wenn das Regalsystem weniger als 24 Stunden am Tag läuft, können die Hochhub-Flurförderzeuge die Puffer in dem Zeitraum füllen und leeren, in dem die Schnittstellenoperationen nicht aktiv sind. Beispiel: Die Schnittstellenoperationen dauern 16 Stunden, dann verteilt das Hochhub-Flurförderzeug den angeforderten Durchsatz des Regalsystems auf 24 Stunden, wodurch sich die Anzahl der Transporte und somit der Hochhub-Flurförderzeuge um 33% verringert.
4. Schnellumschlagswaren oder so genannte Cross-Dock-Paletten können von den niedrighubigen oder hublosen Flurförderzeugen in den Lagerstellen der untersten Regalebene ein- und ausgelagert werden, ohne dass die Hochhub-Flurförderzeuge eingreifen müssen. Dies kann durch eine intelligente Lagerverwaltungs-Strategie erreicht werden.
5. Die Flurförderzeuge, die die Waren von / zu den Schnittstellenbereichen transportieren, benötigen keine Hubeinrichtung. Für den Transport der Waren von und zu den Schnittstellenbereichen können bevorzugt die niedrighubigen oder hublosen Flurförderzeuge verwendet werden, die deutlich günstiger sind (z.B. pro Stück 15.000 - 40.000 €) als beispielsweise automatisierte Gabelstapler (z.B. pro Stück 65.000 - 130.000 €).
6. Die flachen Unterfahr-Flurförderzeuge können die Regalgassen wechseln, indem sie im leeren Zustand unter den Lagerstellen der untersten Regalebene hindurchfahren oder im beladenen Zustand durch bestimmte Tunnel senkrecht zu den Regalgassen fahren. Dies bedeutet, dass der Weg zu den Schnittstellenoperationen optimiert werden kann.

Weitere Vorteile und Einzelheiten der Erfindung werden anhand des in den schematischen Figuren dargestellten Ausführungsbeispiels näher erläutert. Hierbei zeigen
Figur 1 eine Draufsicht auf eine Regalgasse eines Hochregallagersystems,
Figur 2 ein Unterfahr-Flurförderzeug und
Figur 3 ein Hochhub-Flurförderzeug.

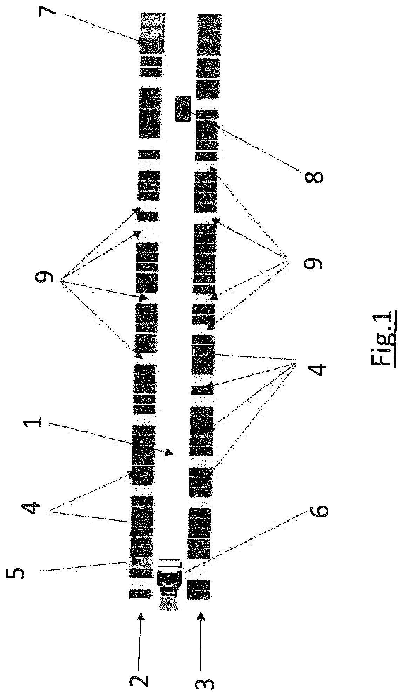

In der Figur 1 ist eine Regalgasse 1 eines erfindungsgemäßen Hochregallagersystems mit zwei Regalreihen 2 und 3 dargestellt. Die Regalreihen 2 und 3 verfügen über mehrere, übereinander angeordnete Regalebenen, die insgesamt eine Höhe von zum Beispiel 12 Metern aufweisen. Der Übersichtlichkeit wegen ist in der Figur 1 nur die unterste Regalebene dargestellt.

In den Regalebenen der Regalreihen 2, 3 befinden sich freie Lagerstellen 9 zur Einlagerung von auf Paletten angeordneten Waren 5 und bereits belegte Lagerstellen 4. In der Figur 1 ist nur die unterste Regalebene mit den dort freien Lagerstellen 9 und den dort belegten Lagerstellen 4 gezeigt.

Das Hochregallagersystems ist im dargestellten Ausführungsbeispiel als automatisiertes Schmalgang-Regallagersystem ausgebildet.

Für den vertikalen Transport der Waren 5 in der Regalgasse 1, also zum Hochheben der einzulagernden Waren 5 von der untersten Regalebene in einer höhere Regalebene sowie zum Herunterheben der auszulagernden Waren 5 von einer höheren Regalebene in die unterste Regalebene, ist ein als Schmalgangstapler ausgebildetes Hochhub-Flurförderzeug 6 vorgesehen. Den horizontalen Transport der Waren 5 zwischen einem Warenaufnahme- und Warenabgabe-Bereich 7 zu den Lagerstellen 4, 9 der untersten Regalebene in der Regalgasse 1 übernimmt überwiegend ein als flaches, Unterfahr-Flurförderzeug, ein sogenanntes Turtle, ausgebildetes niedrighubiges oder hubloses Flurförderzeug 8. Der Warenaufnahme- und Warenabgabe-Bereich 7 kann am Ende der Regalgasse 1 angeordnet sein. Alternativ kann der Warenaufnahme- und Warenabgabe-Bereich 7 entfernt von der Regalgasse 1 angeordnet sein und als entfernter Schnittstellenbereich ausgebildet sein, von dem einzulagernde Waren 5 herantransportiert bzw. auslagernde Waren 5 hintransportiert werden.

Die einzulagernden Waren 5 werden mittels des niedrighubigen oder hublosen Flurförderzeugs 8 am Warenaufnahme- und Warenabgabe-Bereich 7 aufgenommen und in die Regalgasse1 hinein transportiert und an freien, als Übergabestellen dienenden, Lagerstellen 9 der untersten Regalebene abgelegt, wo die Waren 5 mittels des Hochhub-Flurförderzeugs 6 aufgenommen und an, als Bestimmungsort vorgesehenen, freien Lagerstellen in Regalebenen oberhalb der untersten Regalebene abgelegt werden. Für die als Übergabestellen dienende Lagerstelle 9 der untersten Regalebene wird bevorzugt eine freie Lagerstelle der untersten Regalebene genutzt, die der Lagerstelle in der höhere Regalebene, an der die Ware 5 einzulagern ist, am nächsten liegt, so dass das Hochhub-Flurförderzeugs 6 keinen horizontalen Transport oder nur eine geringen horizontalen Transport der einzulagernden Ware 5 in der Regalgasse 1 durchführen muss.

Entsprechend werden auszulagernde Waren 5 mittels des Hochhub-Flurförderzeugs 6 von belegten Lagerstellen in Regalebenen oberhalb der untersten Regalebene entnommen und an freien, als Übergabestellen dienenden, Lagerstellen 9 der untersten Regalebene abgelegt, wo die Waren 5 mittels des niedrighubigen oder hublosen Flurförderzeugs 8 aufgenommen, aus der Regalgasse 1 heraus transportiert und zum Warenaufnahme- und Warenabgabe-Bereich 7 transportiert werden. Für die als Übergabestellen dienende Lagerstelle 9 der untersten Regalebene wird bevorzugt eine freie Lagerstelle der untersten Regalebene genutzt, die der Lagerstelle in der höheren Regalebene, aus der die Ware 5 auszulagern ist, am nächsten liegt, so dass das Hochhub-Flurförderzeugs 6 keinen horizontalen Transport oder nur einen geringen horizontalen Transport der auszulagernden Ware 5 in der Regalgasse 1 durchführen muss.

Der große Unterschied der Erfindung zum Stand der Technik besteht dabei darin, dass für den horizontalen Transport der Waren 5 innerhalb der Regalgasse 1 anstelle von Hochhub-Flurförderzeugen 6 überwiegend die niedrighubigen oder hublosen Flurförderzeuge 8 verwendet werden. Dies bedeutet, dass auch in engen Regalgassen 1 eine direkte Palettenaufnahme und Palettenabgabe mit den niedrighubigen oder hublosen Flurförderzeuge 8 auf der untersten Regalebene realisiert werden kann. Aufgrund dieses Vorteils können die niedrighubigen oder hublosen Flurförderzeuge 8 direkt auf alle Lagerstellen und Paletten auf der untersten Regalebene zugreifen, ohne dass diese Paletten zuerst durch das Hochhub-Flurförderzeug 6 zu einem Übergabeplatz am Ende der Regalgasse 1 transportiert werden müssen.

Die Erfindung ergibt auch einen besonderen Vorteil für den Transport der Paletten in den oberen Regalebenen: Diese Paletten müssen nicht mehr mit dem Hochhub-Flurförderzeug 6 durch die gesamte Regalgasse 1 von und zu einem Übergabeplatz am Ende der Regalgasse 1 transportiert werden, sondern können mit dem niedrighubigen oder hublosen Flurförderzeuge 8 an einer nächstgelegenen, freien, als Übergabestelle dienenden Lagerstelle 9 auf der untersten Regalebene abgelegt oder aufgenommen werden. Dort haben die niedrighubigen oder hublosen Flurförderzeuge 8 direkten Zugang zu den Paletten.

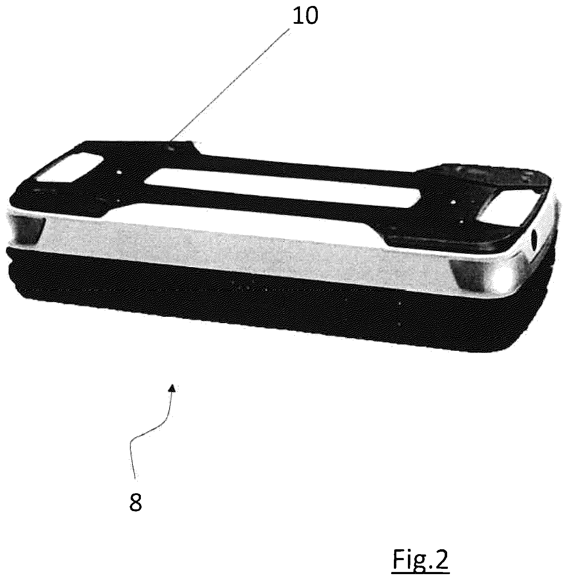

In der Figur 2 ist das als flaches Unterfahr-Flurförderzeug, sogenanntes Turtle, ausgebildete niedrighubige oder hublose Flurförderzeug 8 aus der Figur 1 in einer Detailansicht dargestellt. Das Flurförderzeug 8 verfügt über eine, auf dem Flurförderzeug 8 angeordnete, als Lastplattform ausgebildete, Lastaufnahmeeinrichtung 10.

Die Lastaufnahmeeinrichtung 10 weist eine Grundfläche auf, die etwa der Grundfläche einer Palette entspricht. Das Flurförderzeug 8 passt vollständig unter die Palette. Außerdem verfügt die Lastaufnahmeeinrichtung 10 über keine oder nur eine niedrighubige Hubeinrichtung.

Zur Aufnahme einer Palette fährt das Flurförderzeug 8 einfach unter die, beispielsweise auf Ständern der untersten Regalebene abgelegte Palette.

Beim Flurförderzeug 8 handelt es sich um ein fahrerloses, autonomes oder automatisiertes Flurförderzeug 8, das von einem zentralen Lagerverwaltungssystem gesteuert wird.

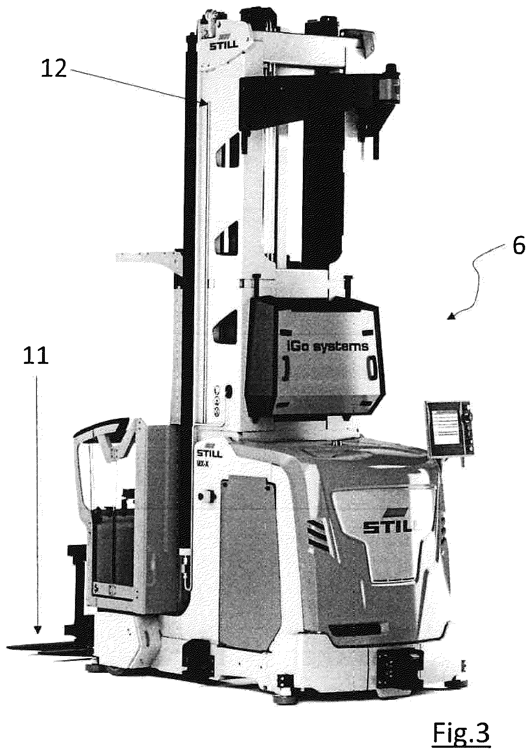

Die Figur 3 zeigt das als Schmalgangstapler ausgebildete Hochhub-Flurförderzeug 6 aus der Figur 1 in einer Detailansicht. Das Hochhub-Flurförderzeug 6 verfügt über eine höhenbewegliche Lastaufnahmeeinrichtung 11, beispielsweise eine nach links und rechts verschwenkbaren Lastgabel, die an einem Hubmast 12 anhebbar und absenkbar angeordnet ist.

Der Hubmast 12 ist soweit ausfahrbar, dass mit der Lastaufnahmeeinrichtung 11 alle Lagerstellen zwischen der untersten Regalebene und der obersten Regalebenen in beispielsweise 12 Metern Höhe erreicht werden können.

Beim Hochhub-Flurförderzeug 6 handelt es sich ebenfalls um ein fahrerloses, autonomes oder automatisiertes Fahrzeug, das ebenfalls vom zentralen Lagerverwaltungssystem gesteuert wird.

Die Erfindung ist nicht auf ein automatisiertes Schmalgang-Regallagersystem beschränkt. Es versteht sich, dass die Erfindung auch in anderen Regallagersystemen eingesetzt werden kann, beispielsweise Breitgang-Regallagersystemen, Verschieberegalsystemen oder Shuttle-Regalsystemen.

## Patentansprüche

1. Verfahren zum Betreiben eines Regallagersystems, insbesondere Hochregallagersystems, mit Regalreihen (2, 3), die mehrere, übereinander angeordnete, Regalebenen mit Lagerstellen (4, 9) für, insbesondere auf Paletten angeordnete, Waren (5) aufweisen, sowie zwischen den Regalreihen (2, 3) befindlichen Regalgassen (1), wobei mittels mindestens eines, in Längsrichtung der Regalgassen (1) bewegbaren, Hochhub-Flurförderzeug (6), insbesondere Schmalgangstapler, mit einer höhenbeweglichen, alle Regalebenen erreichbaren, Lastaufnahmeeinrichtung (11) zumindest die oberhalb der untersten Regalebene liegenden Regalebenen bedient werden, um Waren (5) an den Lagerstellen dieser Regalebenen ein- und auszulagern, **dadurch gekennzeichnet, dass** mittels mindestens eines zusätzlich zum Hochhub- Flurförderzeug (6) vorgesehenen, in den Regalgassen (1) bewegbaren, niedrighubigen oder hublosen Flurförderzeugs (8) mit einer, nur die unterste Regalebene erreichbaren, Lastaufnahmeeinrichtung (10) die unterste Regalebene bedient wird, um Waren an den Lagerstellen (4, 9) der untersten Regalebene ein- und auszulagern.

2. Verfahren nach Anspruch 1, **dadurch gekennzeichnet, dass** als niedrighubiges oder hubloses Flurförderzeug (8) ein flaches Unterfahr-Flurförderzeug mit einer als, auf dem Unterfahr-Flurförderzeug angeordneten, Lastplattform ausgebildeten Lastaufnahmeeinrichtung (10) verwendet wird.

3. Verfahren nach Anspruch 2, **dadurch gekennzeichnet, dass** ein Unterfahr-Flurförderzeug verwendet wird, das eine Grundfläche aufweist, die der Grundfläche einer Palette entspricht, so dass das Unterfahr-Fahrzeug vollständig unter die Palette passt.

4. Verfahren nach einem der Ansprüche 1 bis 3, **dadurch gekennzeichnet, dass** das Hochhub- Flurförderzeug (6) nur innerhalb der Regalgassen (1) bewegt wird.

5. Verfahren nach einem der Ansprüche 1 bis 4, **dadurch gekennzeichnet, dass** das niedrighubige oder hublose Flurförderzeug (8) zur Warenaufnahme und Warenabgabe zu mindestens einem Warenaufnahme- und Warenabgabe-Bereich (7), insbesondere an mindestens einem Ende der Regalgassen (1), bewegt wird.

6. Verfahren nach Anspruch 5, **dadurch gekennzeichnet, dass** die auszulagernden Waren mittels des Hochhub- Flurförderzeugs (6) von Lagerstellen in Regalebenen oberhalb der untersten Regalebene entnommen und an freien, als Übergabestellen dienenden, Lagerstellen (9) der untersten Regalebene abgelegt werden, wo sie mittels des niedrighubigen oder hublosen Flurförderzeugs (8) aufgenommen und aus den Regalgassen (1) zum Warenaufnahme- und Warenabgabe-Bereich (7) transportiert werden.

7. Verfahren nach Anspruch 5 oder 6, **dadurch gekennzeichnet, dass** die einzulagernden Waren (5) mittels des niedrighubigen oder hublosen Flurförderzeugs (8) am Warenaufnahme- und Warenabgabe-Bereich (7) aufgenommen und in die Regalgassen (1) transportiert werden und an freien, als Übergabestellen dienenden, Lagerstellen (9) der untersten Regalebene abgelegt werden, wo sie mittels des Hochhub- Flurförderzeugs (6) aufgenommen und an Lagerstellen in Regalebenen oberhalb der untersten Regalebene abgelegt werden.

8. Verfahren nach Anspruch 6 oder 7, **dadurch gekennzeichnet, dass** als Übergabestellen freie Lagerstellen (4, 9) der untersten Regalebene verwendet werden, die sich in Nähe der Lagerstellen der oberen Regalebenen befinden, von denen die auszulagernden Waren (5) mittels des Hochhub- Flurförderzeugs (6) entnommen oder an denen die einzulagernden Waren (5) mittels des Hochhub-Flurförderzeugs (6) abgelegt werden.

9. Verfahren nach einem der Ansprüche 1 bis 8, **dadurch gekennzeichnet, dass** als Hochhub-Flurförderzeug (6) und als niedrighubiges oder hubloses Flurförderzeug (8) autonome oder automatisierte Flurförderzeuge verwendet werden.

10. Verfahren nach einem der Ansprüche 1 bis 9, **dadurch gekennzeichnet, dass** das Hochhub-Flurförderzeug (6) und das niedrighubige oder hublose Flurförderzeug (8) von einem zentralen Lagerverwaltungssystem gesteuert werden.

11. Verfahren nach einem der Ansprüche 1 bis 10, **dadurch gekennzeichnet, dass** Waren (5) mit einer kurzen Einlagerungsdauer in der untersten Regalebene eingelagert werden.

12. Verfahren nach einem der Ansprüche 1 bis 11, **dadurch gekennzeichnet, dass** zum Wechseln der Regalgassen (1) Tunnel zwischen benachbarten Regalgassen (1) verwendet werden, durch die das niedrighubige oder hublose Flurförderzeug (8) bewegt wird.

13. Regallagersystem, insbesondere Hochregallagersystem, zur Durchführung des Verfahrens nach einem der Ansprüche 1 bis 12 mit Regalreihen (2, 3), die mehrere, übereinander angeordnete, Regalebenen mit Lagerstellen (4, 9) für, insbesondere auf Paletten angeordnete, Waren (5) aufweisen, sowie zwischen den Regalreihen (2, 3) befindlichen Regalgassen (1), wobei das Regallagersystem mindestens ein, in Längsrichtung der Regalgassen bewegbares, Hochhub-Flurförderzeug (6), insbesondere Schmalgangstapler, mit einer höhenbeweglichen, alle Regalebenen erreichbaren, Lastaufnahmeeinrichtung (11) umfasst, **dadurch gekennzeichnet, dass** das Regallagersystem zusätzlich zum Hochhub-Flurförderzeug (6) mindestens ein, in den Regalgassen (1) bewegbares, niedrighubiges oder hubloses Flurförderzeug (8) mit einer, nur die unterste Regalebene erreichbaren, Lastaufnahmeeinrichtung (10) umfasst sowie ein, mit dem Hochhub-Flurförderzeug (6) und dem niedrighubigen oder hublosen Flurförderzeug (8) in Wirkverbindung stehendes, zentrales Lagerverwaltungssystem umfasst, das dazu eingerichtet ist, das Hochhub-Flurförderzeug (6) so zu steuern, dass zumindest die oberhalb der untersten Regalebene angeordneten Regalebenen bedient werden, und das niedrighubige oder hublose Flurförderzeug (8) so zu steuern, dass die unterste Regalebene bedient wird.
